# EUROPÄISCHE PATENTSCHRIFT

(11) **EP 0 664 074 B1**
(45) Veröffentlichungstag und Bekanntmachung des Hinweises auf die Patenterteilung: **27.05.1998**
(21) Anmeldenummer: 94120776.3
(22) Anmeldetag: 27.12.1994
(51) Int. Cl.: A01D 17/10

(54) **Siebstabband**
Screening rod convegor
Crible convoyeur à barreaux

(30) Priorität: 20.01.1994 DE 4401586
(43) Veröffentlichungstag der Anmeldung: 26.07.1995
(73) Patentinhaber: GUMMI-JÄGER KG GMBH & CIE, D-30625 Hannover (DE)
(72) Erfinder: Röhrs, Friederich, D-29227 Celle (DE)
(74) Vertreter: Depmeyer, Lothar

(56) Entgegenhaltungen:
- DE-A- 3 109 209
- DE-A- 3 733 712

## Beschreibung

Die Erfindung betrifft ein Siebstabband für landwirtschaftliche Maschinen, insb. Erntemaschinen, wobei die die Siebung bestimmenden Stäbe quer zur Bewegungsrichtung des Siebstabbandes angeordnet sind und mit ihren abgeflachten, an ihren Enden befindlichen Abschnitten auf umlaufenden Gurten aufliegen und dort durch sie durchsetzende Schrauben, Niete od. dgl. befestigt sind.

Bei den bekannten Siebstabbändern dieser Art kann die Befestigung der erwähnten abgeflachten Abschnitte nicht durch einen einzelnen Niet od. dgl. erfolgen, vielmehr müssen in Stabrichtung gesehen zumindest zwei Niete od. dgl. hintereinander gesetzt werden, wobei sich bei dem Niet, der dem freien Ende der Stäbe abgekehrt ist, Schwierigkeiten ergeben können, und zwar in dem durch das Nietloch geschwächten Teil des Abschnittes des Stabes.

Der Erfindung liegt die Aufgabe zugrunde, durch eine besondere Gestaltung der Stäbe diese Nachteile zu beseitigen und demgemäss dafür Sorge zu tragen, dass festigkeitsmässig eine günstigere Beanspruchung der erwähnten Abschnitte erreichbar ist.

Zur Lösung dieser Aufgabe haben erfindungsgemäss die erwähnten Abschnitte der Stäbe im Endbereich zum Wirkteil der Stäbe hin im Vergleich zum freien Ende der Abschnitte eine grössere Wandstärke. Demgemäss sind für den genannten Abschnitt der Stäbe unterschiedliche Wandstärken vorgesehen, um so im dem vorgegannten Endbereich eine grössere Festigkeit erzielen zu können. Die unterschiedlichen Wandstärken - eine zumindest im wesentlichen gleichbleibende Breite unterstellt - kann durch eine Stufung, aber auch durch eine allmähliche Verringerung der Wandstärke, ggfs. aber auch durch eine Kombination dieser Massnahmen erreicht werden.

Diese Ausbildung der an den Enden der Stäbe befindlichen Abschnitte eröffnet auch die Möglichkeit, bei mit drei Gurten ausgestatteten Siebstabbändern im Bereich des mittig gelegenen Gurtes eine Überlappung der auf der einen und der anderen Seite des Siebstabbandes befindlichen Stäbe vorzunehmen, wobei die aufeinander anzuordnenden Abschnitte der beiden zusammengehörigen Stäbe vorzugsweise bezüglich ihrer Wandstärke so ausgewählt werden, dass sich über die gesamte Überlappungsstelle hinweg eine Gesamthöhe der beiden Abschnitte in der Weise ergibt, dass diese nicht oder nicht nennenswert grösser ist als die Höhe der Stäbe im Wirkbereich bzw. zwischen den Gurten. Es versteht sich, dass bei z.B. zwei Nieten zur Befestigung an der Überlappungsstelle ebenfalls nur zwei Niete vorgesehen werden, wobei dann verständlicherweise jeder Niet zwei Abschnitte unterschiedlicher Wandstärke durchsetzt.

Weitere Einzelheiten der Erfindung werden anhand der Zeichnung erläutert, in der Ausführungsbeispiele der Erfindung dargestellt sind. Es zeigen :
Fig. 1 eine Teildraufsicht auf ein Siebstabband für eine landwirtschaftliche Erntemaschine,
Fig. 2 einen Schnitt nach der Linie II - II von Fig. 1,
Fig. 3 einen Schnitt nach der Linie III - III von Fig. 1 unter Fortlassung des zugehörigen Gurtes,
Fig. 4 eine Draufsicht auf die Darstellung gemäss Fig. 3 und
Fig. 5 einen Schnitt nach der Linie V - V von Fig. 2 unter Fortlassung des zugehörigen Gurtes.

Das sich in Richtung des Pfeiles 1 bewegende, endlose, auf Antriebs- und Umlenkrollen geführte Siebstabband weist drei endlose, zugfeste, z.B. aus gewebeverstärktem Gummi bestehende Gurte 2, 3 und 4 auf, die sich in Längsrichtung des Siebstabbandes erstrecken. Diese Gurte dienen zur Halterung von quer zu den Gurten 2 - 4 verlaufenden, meist aus Stahl bestehenden Stäben 5, 6, die mit gegenseitigem Abstand angeordnet sind und durch ihren Abstand den Grad des Aussiebens bestimmen.

Alle Stäbe 5, 6 weisen an ihren Enden gegenüber dem runden Querschnitt zwischen den Gurten 2 - 4 abgeflachte Abschnitte 7, 8 und 9 auf, die je mit zwei Löchern 1o zur Aufnahme von Nieten 11 dienen, die nicht nur die Abschnitte 7 - 9, sondern auch die Gurte 2 - 4 und die darunter befindlichen Metallplatten 12 durchsetzen.

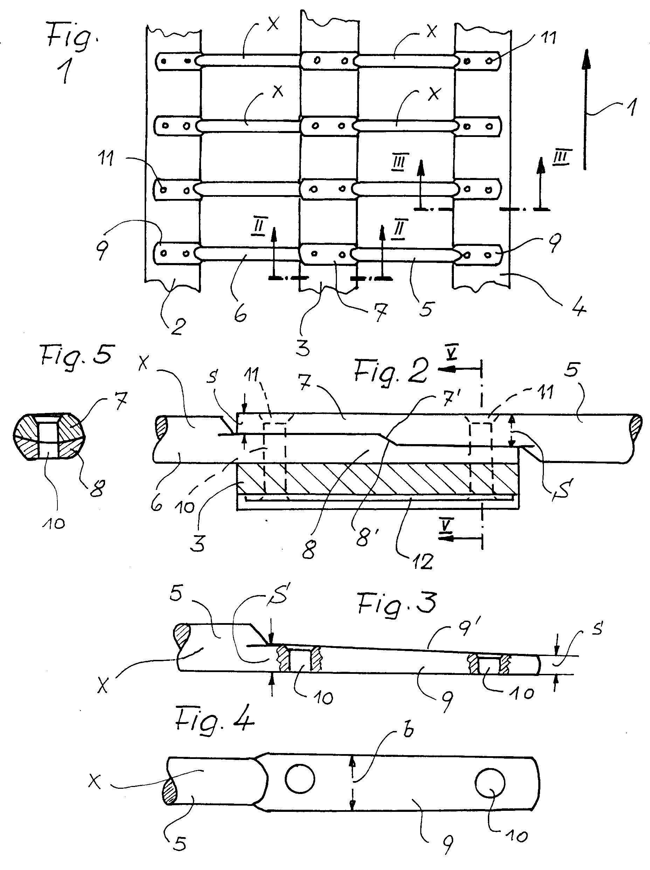

Die Abschnitte 7 - 9 sind so ausgebildet, dass bei im wesentlichen gleichbleibender Breite b deren Wandstärke s am freien Ende der Stäbe 5, 6 geringer ist im Vergleich zum engegengesetzten Endteil, der dem im Querschnitt runden Wirkteil x der Stäbe 5, 6 zwischen den Gurten 2, 4 zugekehrt ist (S grösser als s), um so den erhöhten Festigkeitsbedürfnissen Rechnung zu tragen. Diese Dickenbemessung kann - wie aus Fig. 2 erkennbar ist - durch eine Stufung, aber auch gemäss Fig. 3 durch einen sich allmählich verjüngenden, konischen Verlauf erreicht werden, wobei aber in jedem Falle Wandstärkenminderungen etwa je auf die Hälfte der grössten Wandstärke S vorgenommen werden sollen.

Eine besondere Bedeutung hat die Erfindung bei den Siebstabbbändern gemäss Fig. 1 mit einem mittig angeordneten dritten Gurt 3 und den hier zu befestigenden Abschnitten 7, 8. Hier sind nämlich die Abschnitte 7, 8 sich überlappend angeordnet, und zwar in der Weise, dass sich die einzelnen Teilabschnitte je zu einer Wandstärke ergänzen, die praktisch gleich gross ist dem Durchmesser der Stäbe 5, 6 im Wirkteil x. Obwohl also eine Überlappungsverbindung gegeben ist, ergeben sich keine Verdickungen im Bereich des Gurtes 3.

Fig. 5 lässt erkennen, dass die Abschnitte 7, 8 zur Vermeidung von lateralen Relativbewegungen formschlüssig ineinandergreifen; die einander zugekehrten Flächen der Abschnitte 7, 8 sind aus diesem Grunde schwach konkav bzw. konvex.

Es sei erwähnt, dass bei der Überlappung gemäss Fig. 2 zweckmässigerweise eine Stufung der Abschnitte 7, 8 vorgesehen wird in der Weise, dass die Stufenflächen 7' und 8' aneinanderstossen, um so auch Längskräfte übertragen bzw. die Niete 11 entlasten zu können. Im Bereich der Gurte 2, 4 kann ohne weiteres eine konische Verjüngung gemäss Fig. 3 genutzt werden.

Darüber hinaus ist es möglich, die Breite b der Abschnitte 7 - 9 an dem dem Wirkteil x zugekehrten Ende geringfügig grösser zu gestalten im Vergleich zur Breite b am freien Ende dieser Abschnitte.

Es liegt ferner im Rahmen der Erfindung, auch kleinere Wandstärkenveränderungen vorzusehen, indem für den Wert S Masse verwendet werden, die etwa das 1.3 bis 1.8-fache des Wertes s ausmachen. Verhältnisse von z.B. 6.5 zu 4.5 mm und 7 mm zu 5 mm sind möglich und führen in der Praxis zu brauchbaren Werten.

## Patentansprüche

1. Siebstabband für landwirtschaftliche Maschinen, insb. Erntemaschinen, wobei die die Siebung bestimmenden Stäbe quer zur Bewegungsrichtung des Siebsstabbandes angeordnet und mit ihren abgeflachten, an ihren Enden befindlichen Abschnitten auf umlaufenden, flachen Gurten aufliegen und dort durch sie durchsetzende Schrauben, Niete od. dgl. befestigt sind, dadurch gekennzeichnet, dass die Abschnitte (7,8,9) im Endbereich zum Wirkteil (x) der Stäbe (5,6) hin im Vergleich zum freien Ende der Abschnitte eine grössere Wandstärke (S) aufweisen.

2. Band nach Anspruch 1, dadurch gekennzeichnet, dass die Wandstärkenveränderung durch Stufung herbeigeführt ist.

3. Band nach Anspruch 1, dadurch gekennzeichnet, dass sich die Wandstärke allmählich verändert.

4. Band nach Anspruch 1 mit einem zwischen aussen liegenden Gurten angeordnetem Gurt, auf dem Stäbe befestigt sind, die sich zu der einen und der anderen Bandseite erstrecken, dadurch gekennzeichnet, dass die sich zu den unterschiedlichen Seiten erstreckenden Stäbe (5,6) fluchten und sich mit ihren Abschnitten (7,8) übereinanderliegend und überlappend auf dem zwischen dem Aussengurten (2,4) befindlichen Gurt (3) angeordnet sind.

5. Band nach Anspruch 4, dadurch gekennzeichnet, dass die sich überlappenden Abschnitte (7,8) so zusammengefügt sind, dass die Abschnitte unterschiedlicher Stäbe (5,6) zusammen genommen wandstärkenmässig zumindest im wesentlichen der Dicke ( Durchmesser ) des Wirkteils (x) der Stäbe entspricht.

6. Band nach Anspruch 4, dadurch gekennzeichnet, dass die sich überlappenden Abschnitte (7,8) gestuft sind.

7. Band nach Anspruch 6, dadurch gekennzeichnet, dass die Abschnitte (7,8) so zusammengefügt sind, dass deren Stufenflächen (7',8') aneinander liegen.

8. Band nach Anspruch 6, dadurch gekennzeichent, dass für zwei Befestigungselemente ( Niet 11 ) eine Stufe vorgesehen ist, wobei ein Befestigungselement vor und das zweite Befestigungselement hinter der Stufenfläche (7',8') angeordnet ist.

9. Band nach Anspruch 4, dadurch gekennzeichnet, dass die sich überlappenden Abschnitte (7,8) einen gegen Querkräfte wirksamen Formschluss aufweisen.

10. Band nach Anspruch 9., dadurch gekennzeichent, dass der eine Abschnitt (8) konkav und der andere Abschnitt (7) konvex gestaltet ist.

11. Band nach Anspruch 1, dadurch gekennzeichnet, dass die die unterschiedlichen Wandstärken ausmachenden Flächen (9') dem Gurt (2,3,4) abgekehrt sind, während die auf dem Gurt angeordnete Fläche mit der unteren Seite des Wirkteils (x) der Stäbe (5,6) fluchtet ( Fig. 2 Stab 6 ).

12. Band nach Anspruch 4, 6 und 8, dadurch gekennzeichnet, dass in jedem Abschnitt (7,8) lediglich eine Stufe und zwei Befestigungselemente (11) vorgesehen sind.

13. Band nach Anspruch 1, dadurch gekennzeichnet, dass die grössere Wandstärke (S) etwa das 1.3 - 2-fache der Wandstärke (s) am freien Ende beträgt.

14. Band nach Anspruch 1, dadurch gekennzeichnet, dass im Bereich der grössten Wandstärke (S) die Breite der Abschnitte (7,8,9) geringfügig grösser ist im Vergleich zur Breite am freien Ende dieser Abschnitte.

## Claims

1. Sieve bar conveyor for agricultural machines, esp. harvesting machines, the bars which determine the sieving being disposed transversely relative to the direction of movement of the sieve bar conveyor and lying on circulatory, flat belts with their flattened portions situated at their ends, and said bars are secured there by screws, rivets or the like which traverse them, characterised in that the portions (7,8,9) have a greater wall thickness (S) in the end region extending towards the active component (x) of the bars (5,6) than towards the free end of the portions.

2. Conveyor according to claim 1, characterised in that the change in wall thickness is caused by stepping.

3. Conveyor according to claim 1, characterised in that the wall thickness changes gradually.

4. Conveyor according to claim 1, having a belt disposed between externally situated belts, bars being secured on said belt and extending to both sides of the conveyor, characterised in that the bars (5,6), which extend to the different sides, are in alignment and are disposed on the belt (3), situated between the external belts (2,4), so as to lie above one another with their portions (7,8) and so as to overlap one another.

5. Conveyor according to claim 4, characterised in that the overlapping portions (7,8) are joined together so that the portions of different bars (5,6), when considered collectively in terms of wall thickness, correspond at least substantially to the thickness (diameter) of the active component (x) of the bars.

6. Conveyor according to claim 4, characterised in that the overlapping portions (7,8) are stepped.

7. Conveyor according to claim 6, characterised in that the portions (7,8) are joined together so that their step faces (7',8') lie adjacent each other.

8. Conveyor according to claim 6, characterised in that one step is provided for two securing elements (rivet 11), one securing element being disposed in front of the step face (7',8'), and the second securing element being disposed behind said step face.

9. Conveyor according to claim 4, characterised in that the overlapping portions (7,8) have a form lock which counteracts transverse forces.

10. Conveyor according to claim 9, characterised in that one portion (8) has a concave configuration, and the other portion (7) has a convex configuration.

11. Conveyor according to claim 1, characterised in that the faces (9') constituting the varying wall thicknesses face away from the belt (2,3,4), while the face disposed on the belt is in alignment with the lower surface of the active component (x) of the bars (5,6) (Fig. 2, bar 6).

12. Conveyor according to claims 4, 6 and 8, characterised in that only one step and two securing elements (11) are provided in each portion (7,8).

13. Conveyor according to claim 1, characterised in that the greater wall thickness (S) is substantially 1.3-to 2-times the wall thickness (s) at the free end.

14. Conveyor according to claim 1, characterised in that, in the region of the greatest wall thickness (S), the width of the portions (7,8,9) is slightly greater than the width at the free end of these portions.

## Revendications

1. Crible convoyeur à barreaux pour des machines agricoles, notamment pour des moissonneuses, les barreaux, déterminant le criblage, étant disposés transversalement à la direction de déplacement du crible convoyeur à barreaux et reposant par leurs tronçons aplatis se trouvant à leurs extrémités sur des courroies plates qui tournent et y étant fixés par des vis, des rivets ou analogues qui passent à travers ces courroies, caractérisé en ce que les tronçons (7, 8 et 9) ont, dans la région d'extrémité allant vers la partie (x) active des barreaux (5, 6), une épaisseur (S) de paroi plus grande qu'à l'extrémité libre des tronçons.

2. Convoyeur suivant la revendication 1, caractérisé en ce que la variation d'épaisseur de paroi s'effectue par degré.

3. Convoyeur suivant la revendication 1, caractérisé en ce que l'épaisseur de paroi se modifie peu à peu.

4. Convoyeur suivant la revendication 1, ayant une courroie qui est disposée entre des courroies se trouvant à l'extérieur et sur laquelle sont fixés des barreaux qui s'étendent vers un côté et vers l'autre côté du convoyeur, caractérisé en ce que les barreaux (5, 6) s'étendant vers les côtés différents faces sont alignés et sont superposés par leurs tronçons (7, 8) et recouvrent la courroie (3) se trouvant entre les courroies (2, 4) extérieures.

5. Convoyeur suivant la revendication 4, caractérisé en ce que les tronçons (7, 8) qui se recouvrent sont assemblés de façon que les tronçons de barreaux (5, 6) différents pris ensemble correspondent, du point de vue de l'épaisseur de la paroi, au moins sensiblement à l'épaisseur (diamètre) de la partie (x) active des barreaux.

6. Convoyeur suivant la revendication 4, caractérisé en ce que les tronçons (7, 8) qui se recouvrent sont étagés.

7. Convoyeur suivant la revendication 6, caractérisé en ce que les tronçons (7, 8) sont assemblés de manière que leurs surfaces (7', 8') de gradin soient adjacentes.

8. Convoyeur suivant la revendication 6, caractérisé en ce qu'il est prévu un gradin pour deux éléments de fixation (rivets 11), un élément de fixation étant disposé devant et le deuxième élément de fixation étant disposé derrière la surface des gradins (7', 8').

9. Convoyeur suivant la revendication 4, caractérisé en ce que les tronçons (7, 8) qui se recouvrent ont une complémentarité de forme propre à lutter contre les forces transversales.

10. Convoyeur suivant la revendication 9, caractérisé en ce que l'un des tronçons (8) est concave et l'autre tronçon (7) est convexe.

11. Convoyeur suivant la revendication 1, caractérisé en ce que les surfaces (9'), faisant en sorte que les épaisseurs de paroi sont différentes, sont éloignées de la courroie (2, 3, 4), tandis que la surface disposée sur la courroie est alignée avec la face intérieure de la partie (x) active des barreaux (5, 6) (figure 2, barreau 6).

12. Convoyeur suivant l'une des revendications 4, 6 et 8, caractérisé en ce qu'il est prévu dans chaque tronçon (7, 8) seulement un gradin et deux éléments de fixation (11).

13. Convoyeur suivant la revendication 1, caractérisé en ce que l'épaisseur (S) de paroi la plus grande représente environ de 1,3 à 2 fois l'épaisseur (s) de paroi à l'extrémité libre.

14. Convoyeur suivant la revendication 1, caractérisé en ce que dans la région de l'épaisseur (S) de paroi la plus grande, la largeur des tronçons (7, 8, 9) est légèrement plus grande que la largeur à l'extrémité libre de ces tronçons
